# EUROPEAN PATENT APPLICATION

(11) **EP 4 418 771 A1**
(43) Date of publication of application: **21.08.2024**
(21) Application number: 24156181.0
(22) Date of filing: 07.02.2024
(51) Int. Cl.: H04W 56/00, H04B 7/00, H04W 76/00, H04W 88/00

(54) **TIMING ADJUSTMENT**

(30) Priority: 14.02.2023 FI 20235148
(71) Applicant: Nokia Technologies Oy, 02610 Espoo (FI)
(72) Inventor: KOSKELA, Timo, Oulu (FI); HAKOLA, Sami-Jukka, Kempele (FI); KARJALAINEN, Juha Pekka, Sotkamo (FI)
(74) Representative: Nokia EPO representatives

(57) **Abstract**

Embodiments of the present disclosure relate to timing adjustment. A terminal device performs timing advance (TA) acquisition on at least one target cell for cell switching from a serving cell for the terminal device to one of the at least one target cell. Then, the terminal device adjusts downlink timing of the at least one target cell, when a timer is running at the terminal device. As a result, it is allowed to efficiently control downlink timing maintenance burden at the terminal device.

## Description

### FIELD

Various example embodiments relate to the field of telecommunication and in particular, to methods, devices, apparatuses, and computer readable storage media for timing adjustment.

### BACKGROUND

In communication technology, there is a constant evolution ongoing in order to provide efficient and reliable solutions for utilizing wireless communication networks. Currently, efforts have been made to develop 5th generation (5G) or 5G advance wireless system. The new wireless systems can support various types of service applications for terminal devices.

In the current wireless system, user equipment (UE) may transmit, in response to a physical downlink control channel (PDCCH) order, a physical random access channel (PRACH) to a network device serving as a candidate cell to acquire the timing advance (TA) corresponding to the candidate cell, and then waits, from the network device a random access response (RAR), which includes a TA value and is transmitted through downlink control information (DCI) scrambled with a random access radio network temporary identifier (RA-RNTI). The UE attempts to detect a PDCCH with the corresponding RA-RNTI from the base station within a period of a window for receiving the RAR to acquire the TA value. Then, the UE adjusts the downlink timing of the candidate cell based on the TA value. However, enhancements on the TA adjustment process are still under further investigation.

### SUMMARY

In general, example embodiments of the present disclosure provide a solution related to timing adjustment.

In a first aspect, there is provided a terminal device. The terminal device comprises at least one processor and at least one memory storing instructions that, when executed by the at least one processor, cause the terminal device at least to: perform timing advance, TA, acquisition on at least one target cell for cell switching from a serving cell for the terminal device to one of the at least one target cell; and adjust, when a timer is running at the terminal device, downlink timing of the at least one target cell.

In a second aspect, there is provided a network device. The network device comprises at least one processor and at least one memory storing instructions that, when executed by the at least one processor, cause the network device at least to: transmit, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In a third aspect, there is provided a method implemented at a terminal device. The method comprises performing timing advance, TA, acquisition on at least one target cell for cell switching from a serving cell for the terminal device to one of the at least one target cell; and adjusting, when a timer is running at the terminal device, downlink timing of the at least one target cell.

In a fourth aspect, there is provided a method implemented at a network device. The method comprises transmitting, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In a fifth aspect, there is provided an apparatus. The apparatus comprises means for performing timing advance, TA, acquisition on at least one target cell for cell switching from a serving cell for the apparatus to one of the at least one target cell; and means for adjusting, when a timer is running at the apparatus, downlink timing of the at least one target cell.

In a sixth aspect, there is provided an apparatus. The apparatus comprises means for transmitting, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In a seventh aspect, there is provided a non-transitory computer readable medium comprising program instructions that, when executed by an apparatus, cause the apparatus at least to: perform timing advance, TA, acquisition on at least one target cell for cell switching from a serving cell for the apparatus to one of the at least one target cell; and adjust, when a timer is running at the apparatus, downlink timing of the at least one target cell.

In an eighth aspect, there is provided a non-transitory computer readable medium comprising program instructions that, when executed by an apparatus, cause the apparatus at least to: transmit, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In a ninth aspect, there is provided a computer program comprising instructions, which, when executed by an apparatus, cause the apparatus at least to: perform, timing advance, TA, acquisition on at least one target cell for cell switching from a serving cell for the apparatus to one of the at least one target cell; and adjust, when a timer is running at the apparatus, downlink timing of the at least one target cell.

In a tenth aspect, there is provided a computer program comprising instructions, which, when executed by an apparatus, cause the apparatus at least to: transmit, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell

In an eleventh aspect, there is provided a terminal device. The terminal device comprises performing circuitry configured to perform timing advance, TA, acquisition on at least one target cell for cell switching from a serving cell for the terminal device to one of the at least one target cell; and adjusting circuitry configured to adjust, when a timer is running at the terminal device, downlink timing of the at least one target cell.

In a twelfth aspect, there is provided a network device. The network device comprises transmitting circuitry configured to transmit, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
FIG. 1A illustrates an example environment in which example embodiments of the present disclosure can be implemented;
FIG. 1B illustrates contention free random access (CFRA) with 4-step random access (RA) type associated with some embodiments of the present disclosure;
FIG. 1C illustrates CFRA with 2-step RA type associated with some embodiments of the present disclosure;
FIG. 2 illustrates a signaling flow between a terminal device and a network device according to some example embodiments of the present disclosure;
FIG. 3 illustrates a flowchart of a method implemented at a terminal device according to some embodiments of the present disclosure;
FIG. 4 illustrates a flowchart of a method implemented at a network device according to some embodiments of the present disclosure;
FIG. 5 illustrates a simplified block diagram of a device that is suitable for implementing some example embodiments of the present disclosure; and
FIG. 6 illustrates a block diagram of an example of a computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G) or 5G advance communication protocols and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a New Radio (NR) NB (also referred to as a gNB), a Remote Radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

In the third-generation partnership project (3GPP), a further enhanced multiple-input multiple-output (feMIMO) evolution work item has been discussed in radio access network work group (RAN1). Some discussions are related to multi TA maintenance/operation, as follows:

| | |
|---|---|
| 7. Study, and if justified, specify the following | |
| | - Two TAs for UL multi-DCI for multi-TRP operation |
| | - Power control for UL single DCI for multi-TRP operation where unified TCI framework extension in objective 2 is assumed. |
| | For the case of simultaneous UL transmission from multiple panels, the operation will only be limited to the objective 6 scenarios. |

The maintenance of uplink time alignment and the configuration of a time advance group (TAG) are specified as follows:

| | |
|---|---|
| 5.2 Maintenance of Uplink Time Alignment | |
| | RRC configures the following parameters for the maintenance of UL time alignment: |
| | - timeAlignmentTimer (per TAG) which controls how long the MAC entity considers the Serving Cells belonging to the associated TAG to be uplink time aligned; |
| | - inactivePosSRS-TimeAlignmentTimer which controls how long the MAC entity considers the Positioning SRS transmission in RRC_INACTIVE in clause 5.26 to be uplink time aligned; |
| | - cg-SDT-TimeAlignmentTimer which controls how long the MAC entity considers the uplink transmission for CG-SDT to be uplink time aligned. |

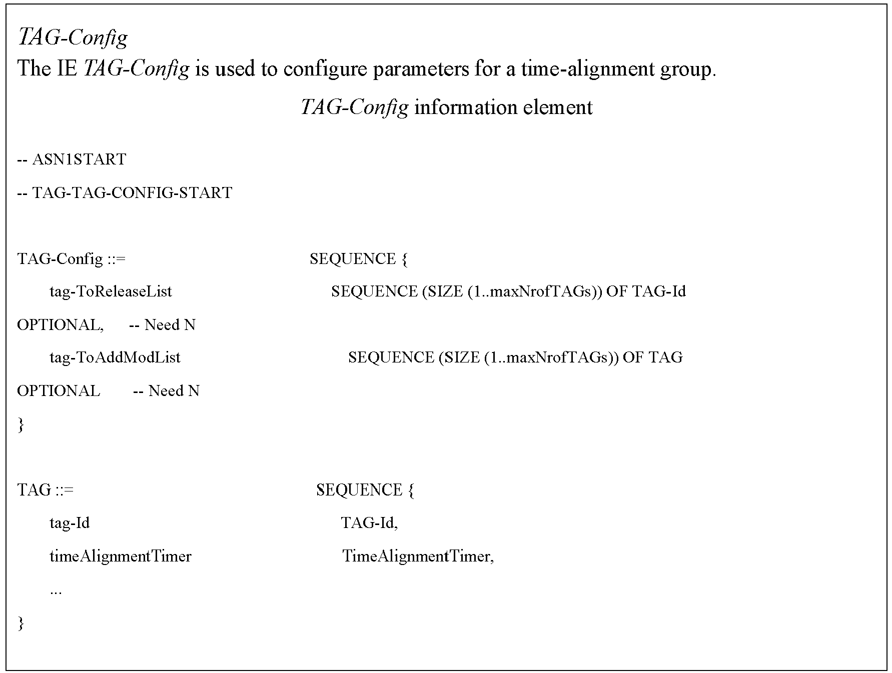

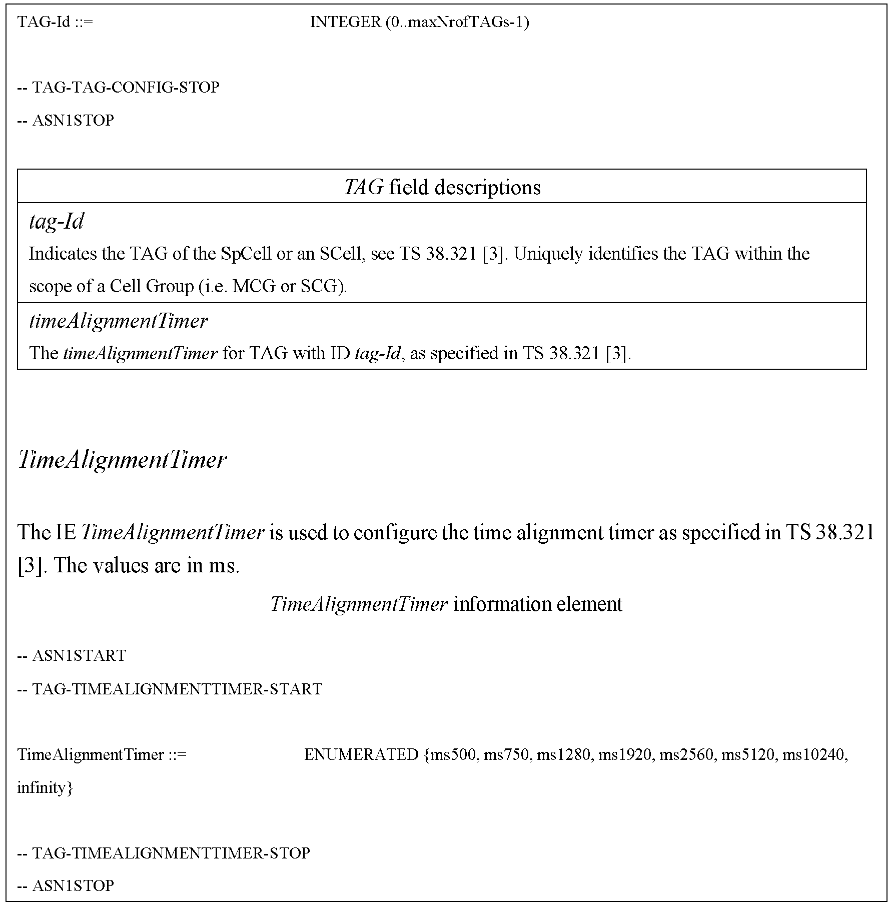

Regarding the timing adjustment, the current specification, for example, technical specification (TS) 38.133, has specified the following contents:

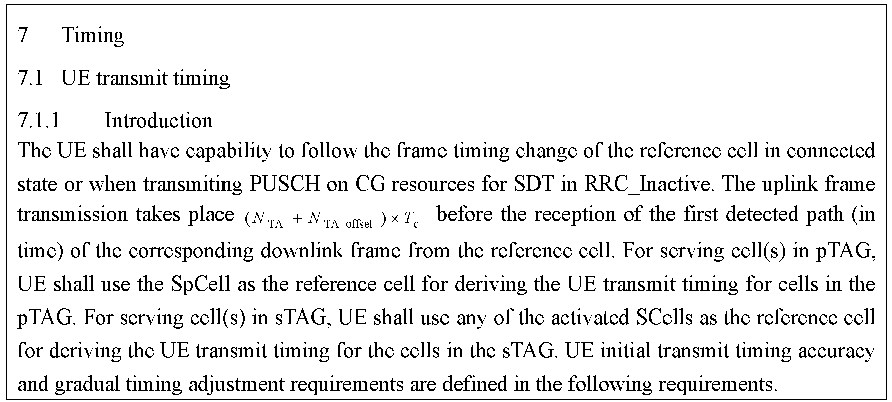

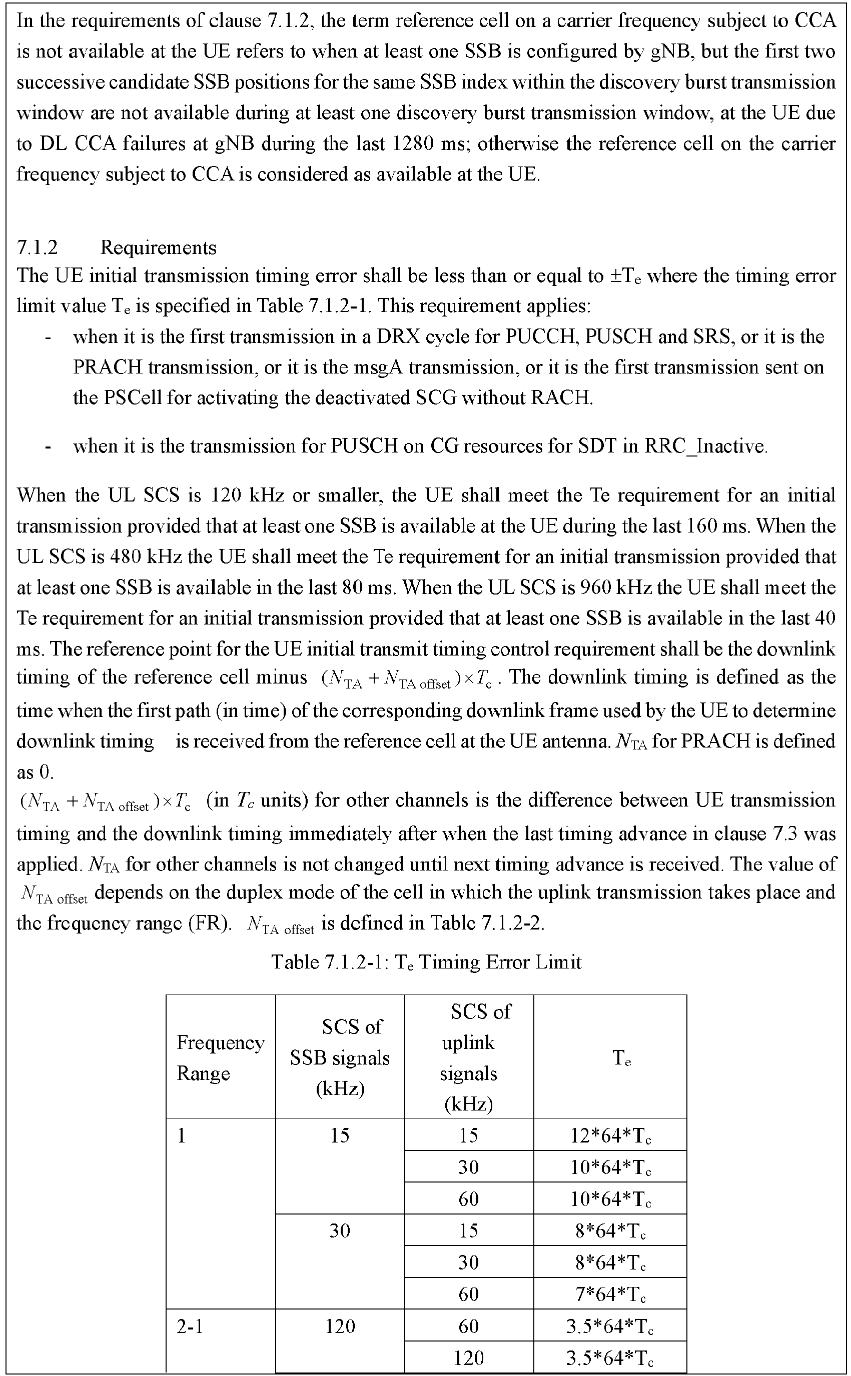

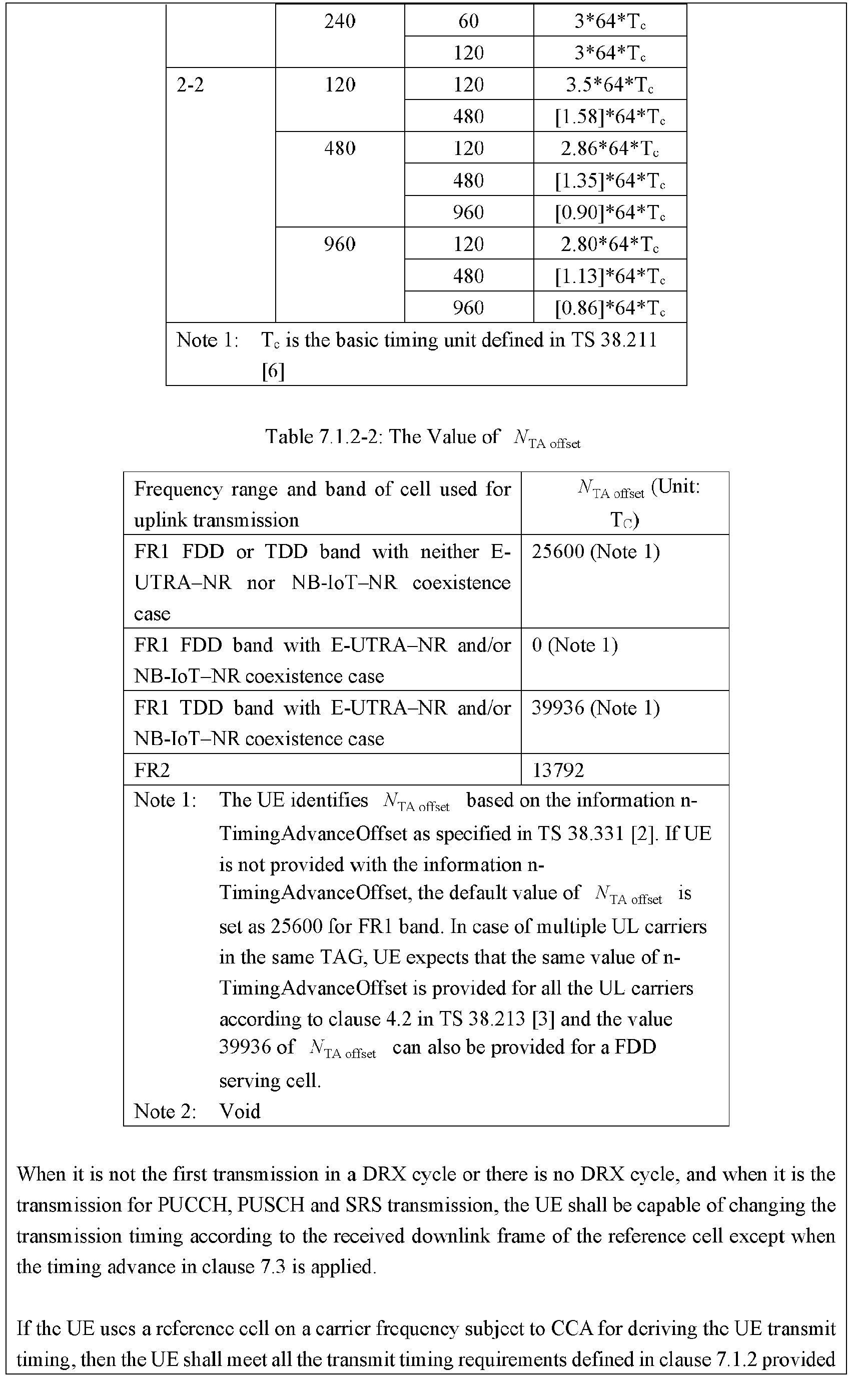

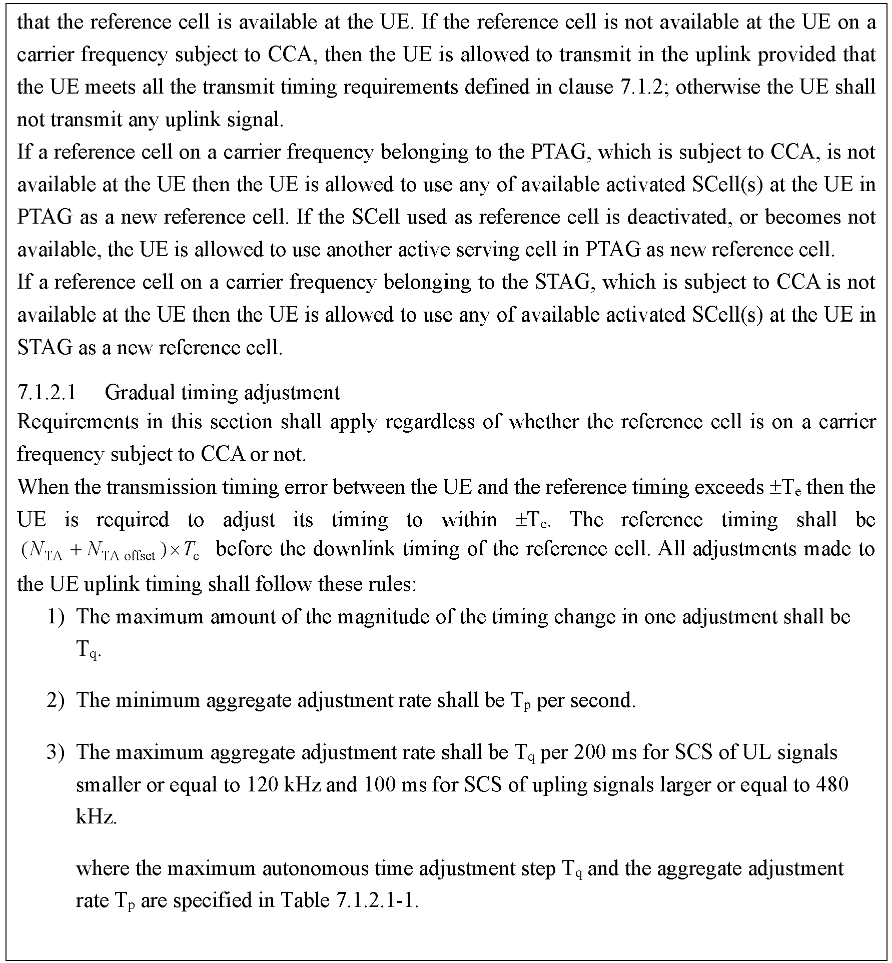

Moreover, to reduce the mobility latency, there are some discussions on further new radio (NR) mobility enhancements in the release 18 (Rel-18) word item description (WID), for example, RP-222332. One of the objectives was agreed to specify the mechanism and procedures of Layer 1/Layer 2 (L1/L2) triggered inter-cell mobility (LTM) which includes the following items:

| | |
|---|---|
| 1. To specify mechanism and procedures of L1/L2 based inter-cell mobility for mobility latency reduction: | |
| | ∘ Configuration and maintenance for multiple candidate cells to allow fast application of configurations for candidate cells [RAN2, RAN3] |
| ∘ Dynamic switch mechanism among candidate serving cells (including SpCell and SCell) for the potential applicable scenarios based on L1/L2 signalling [RAN2, RAN1] | |
| ∘ L1 enhancements for inter-cell beam management, including L1 measurement and reporting, and beam indication [RANI, RAN2] | |
| | - *Note 1: Early RAN2 involvement is necessary, including the possibility of further clarifying the interaction between this bullet with the previous bullet* |
| ∘ Timing Advance management [RANI, RAN2] | |
| ∘ CU-DU interface signaling to support L1/L2 mobility, if needed [RAN3] | |
| *Note 2: FR2 specific enhancements are not precluded, if any.* | |
| *Note 3: The procedure of L1*/*L2 based inter-cell mobility are applicable to the following scenarios:* | |
| | ▪ *Standalone, CA and NR-DC case with serving cell change within one CG* |
| | ▪ *Intra-DU case and intra-CU inter-DU case (applicable for Standalone and CA: no new RAN interfaces are expected)* |
| | ▪ *Both intra-frequency and inter-frequency* |
| | ▪ *Both FR1 and FR2* |
| | · *Source and target cells may be synchronized or non-synchronized* |

In addition, RAN work group 2 (RAN2) has agreed the following relevant agreements in RAN2 #119bis:

| |
|---|
| - RAN2 assumes that whether to use the unified TCI framework as the baseline for beam indication for L1L2 mobility is up to RAN1 (RAN2 observes that L1/L2 mobility need to support inter-freq cases). |
| - A L1/L2 inter-cell mobility candidate (target) configuration is received within an RRC message before the L1/L2 dynamic switch is triggered. |
| - RAN2 assumes L1/2 mobility trigger information is conveyed in a MAC CE, FFS if the MAC CE or a DCI is used for the actual triggering. |
| - RAN2 assumes the MAC CE for L1/2 mobility trigger contains at least a candidate configuration index. |
| - FFS if the MAC CE can indicate TCI state(s) (or other beam info) to activate for the target Cell(s), dep on RAN1 progress. |

For the L1/L2 based mobility scenarios, there are some discussions and agreements related to TA, some of which are described as follows:

| | | |
|---|---|---|
| Agreement (Made in RAN1#110b-e) | | |
| | Support TA acquisition of candidate cell(s) before cell switch command is received in L1/L2 based mobility. | |
| | - FFS: whether this can be applied to candidate cell when it is deactivated SCell (if defined in RAN2) | |
| Agreement | | |
| | For multi-DCI based Multi-TRP operation with two TA enhancement, support CFRA triggered by PDCCH order for both intra-cell and inter-cell cases. | |
| Agreement | | |
| | For multi-DCI based Multi-TRP operation with two TA enhancement, support the case where a PDCCH order sent by one TRP triggers RACH procedure towards either the same TRP or a different TRP at least for inter-cell Multi-DCI. | |
| | - FFS: for intra-cell Multi-DCI | |
| | - FFS: whether there are any restrictions needed | |
| | - FFS: if cross TRP RACH triggering is an optional feature | |
| Agreement | | |
| | For PDCCH ordered RACH in LTM, at least the following enhancements are supported | |
| | - Introduce indication of candidate cell and/or RO of candidate cell in DCI | |
| | - configuration of RACH resource for candidate cell(s) is provided prior to the PDCCH order | |
| | - FFS: whether/how to transmit RAR | |
| Agreement | | |
| | On whether RAR is needed for PDCCH ordered RACH for a candidate cell in LTM, the following alternatives are considered for further study | |
| | - Alt 1: RAR is needed | |
| | - Alt 2: RAR is not needed | |
| | | - Note: If Alt 2 is supported, TA value of candidate cell is indicated in cell switch command |
| | - Alt 3: whether RAR is needed can be configured | |
| Agreement | | |
| | TA updating (i.e. re-acquisition of TA) for candidate cell can be triggered by NW. | |
| | - same triggering mechanism reuse the initial TA acquisition, i.e., PDCCH order triggered RACH in a candidate cell | |

In view of the above, inventors notice that whether the RAR is needed or the RAR reception is configurable, and the provision of the TA value based on the random access procedure (such as CFRA based on the PDCCH order)) may be performed upon triggering the cell switch command. However, if the TA command or the TA value is provided upon the cell switch, the UE may need to maintain the downlink timing for a long period, for example, if the cell switch command does not arrive (i.e. handover conditions do not apply anymore). Even in the case the TA value is provided to the UE before the cell switch command, the cell switch command may not arrive.

Therefore, by now, there is no effective way to perform timing adjustments, especially in mobility scenarios. Enhancements on the timing adjustment procedure shall be considered.

According to embodiments of the present disclosure, there is provided a scheme for timing adjustment. With this scheme, a terminal device performs TA acquisition on at least one target cell for cell switching from a serving cell for the terminal device to one of the at least one target cell. Then, the terminal device adjusts downlink timing of the at least one target cell, when a timer is running at the terminal device.

By using a timer for monitoring downlink timing of the target cell, it makes it possible to efficiently control the downlink timing maintenance burden at the terminal device. The processing complexity at the terminal device is reduced and thus it is allowed to enable more energy saving. Besides, this scheme is simple and easily implementable. Thus, communication efficiency can be improved.

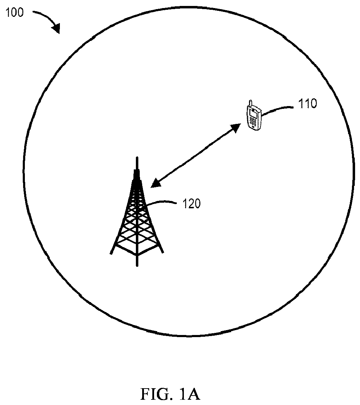

Hereinafter, principle and embodiments of the present disclosure will be described in detail below with reference to the accompanying drawings. Reference is first made to FIG. 1A, which illustrates an example network environment 100 in which example embodiments of the present disclosure can be implemented.

The network environment 100, which may be a part of a communication network, comprises a terminal device 110 and a network device 120 communicating with each other or with other devices via each other.

In some example embodiments, the network device 120 may serve as a serving cell for the terminal device 110, and the network device 120 may provide at least one candidate cell (also referred to as target cell in cell switch scenarios) for the terminal device 110. In some example embodiments, network environment 100 may comprise another network device, and in this case, the network device 120 may serve as a serving cell for the terminal device 110 and the another network device may serve as a target cell for the terminal device 110. Alternatively or additionally, one or more target cells for the terminal device 110 may be provided by the network device 120 and/or the another network device.

The network environment 100 may comprise any suitable number of devices and cells. In the network environment 100, the terminal device 110 and the network device 120 can communicate data and control information with each other. A link from the network device 120 to the terminal device 110 is referred to as a DL, while a link from the terminal device 110 to the network device 120 is referred to as a UL.

It is to be understood that the number of the terminal device 110, and the number of the network device 120 as shown in the communication network environment 100 are only for the purpose of illustration, without any limitation to the scope of the present disclosure. In some example embodiments, the communication network environment 100 may include any number of terminal devices, and/or any number of network devices.

The communications in the network environment 100 may follow any suitable communication standards or protocols, which are already in existence or to be developed in the future, such as universal mobile telecommunications system (UMTS), long term evolution (LTE), LTE-advanced (LTE-A), the fifth generation (5G) New Radio (NR), the sixth generation (6G) or beyond, wireless fidelity (Wi-Fi) and worldwide interoperability for microwave access (WiMAX) standards, and employs any suitable communication technologies, including, for example, multiple-input multiple-output (MIMO), orthogonal frequency division multiplexing (OFDM), time division multiplexing (TDM), frequency division multiplexing (FDM), code division multiplexing (CDM), bluetooth, ZigBee, and machine type communication (MTC), enhanced mobile broadband (eMBB), massive machine type communication (mMTC), ultra-reliable low latency communication (URLLC), carrier aggregation (CA), dual connectivity (DC), and new radio unlicensed (NR-U) technologies.

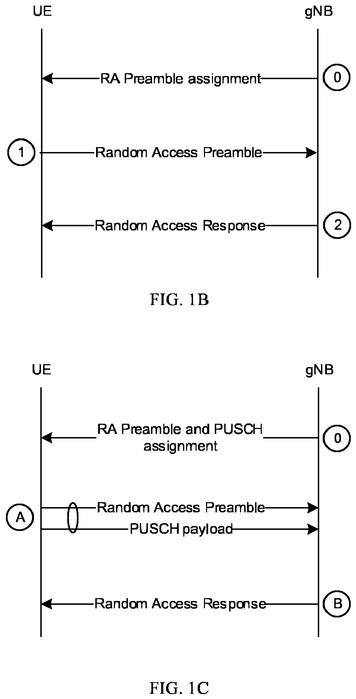

FIG. 1B illustrates CFRA with 4-step RA type associated with some embodiments of the present disclosure. For CFRA with 4-step RA type, a dedicated preamble for MSG1 transmission is assigned by the network. As shown in FIG. 1B, the gNB transmits the RA preamble assignment to the UE. Then, the UE transmits a message 1 (MSG1) comprising the RA preamble on PRACH to the gNB, and monitors for a random access response from the gNB within a configured window. Then, the gNB transmits a random access response to the UE. Upon receiving the random access response from the gNB, the UE ends the random access procedure.

FIG. 1C illustrates CFRA with 2-step RA type associated with some embodiments of the present disclosure. As shown in FIG. 1C, the gNB transmits the RA preamble and physical uplink shared channel (PUSCH) assignment to the UE. Then, the UE transmits a message A (MSGA) comprising the RA preamble and PUSCH payload to the gNB, and monitors for a random access response from the gNB within a configured window. Then, the gNB transmits a random access response to the UE. Upon receiving the random access response from the gNB, the UE ends the random access procedure.

In some embodiments, contention based RA (CBRA) may be used. In this case, upon reception of the random access response, the UE sends a message 3 (MSG3) using the UL grant scheduled in the random access response and monitors the contention resolution. If the contention resolution is not successful after MSG3 (re)transmission(s), the UE goes back to MSG1 transmission.

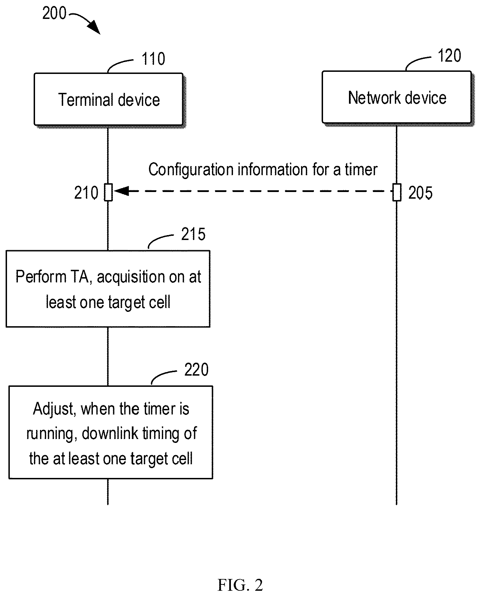

FIG. 2 illustrates a signaling flow 200 between the terminal device and the network device according to some example embodiments of the present disclosure. For the purpose of discussion, the signaling flow 200 will be described with reference to FIG. 1A.

As shown in FIG. 2, alternatively, the network device 120 may transmit (205) configuration information for a timer. The configuration information may configure the terminal device 110 to adjust, when the timer is running at the terminal device 110, downlink timing of at least one target cell (also referred to as candidate cell), after the terminal device 110 performs TA acquisition on the at least one target cell for cell switching from a serving cell for the terminal device 110 to one of the at least one target cell. Accordingly, the terminal device 110 may receive (210) the configuration information for the timer from the network device 120. The serving cell and the at least one target cell may have different physical cell identifiers (PCIs). The network device 120 may serve as the serving cell for the terminal device 110. The target cell 1 for the terminal device 110 may be provided by the network device 120 or another network device. In one example, the configuration information may configure the terminal device 110 to adjust, when the timer is running at the terminal device 110, downlink timing of at least one target cell (also referred to as candidate cell or a cell with different PCI that the serving cell), after the terminal device 110 performs TA acquisition on the at least one target cell. The TA acquisition can be performed by transmitting an uplink signal (SRS, PRACH or the like). In some examples, a response may be transmitted by the network device 120.

Based on the configuration information for the timer, a timer may be configured to supervise the terminal device 110 to perform self-timing adjustment for the at least one target cell for which the TAis acquired or is to be acquired. In this case, when the timer is running, the terminal device 110 may be able (or is assumed/expected to be able) to adjust its downlink timing for the at least one target cell.

As an example, the configuration information may be comprised in a DCI triggering a PDCCH order for a RACH transmission for the TA acquisition. As another example, the configuration information may be comprised in a DCI triggering a sounding reference signal (SRS) transmission for the TA acquisition. As a further example, the configuration information may be comprised in a RACH configuration for a RACH transmission. For example, SRS related configuration information for the timer may be configured in an SRS configuration.

In one example, the configuration information for the timer may be configured in a configuration for TA acquisition. In one example, the configuration information for the timer may be configured in target cell configuration (candidate cell configuration for LTM or a configuration for inter-cell beam management (ICBM) cell).

For example, the configuration information may indicate whether the terminal device 110 starts the timer for adjusting the downlink timing. For example, the DCI triggering the PDCCH order may comprise a field indicating whether the terminal device 110 is configured to start the timer for adjusting the downlink timing.

As an example, the configuration information may indicate, to the terminal device 110, a value of the timer for adjusting the downlink timing. The value of the timer may be indicated by the DCI triggering the PDCCH order. The value of the timer may be also configured as part of the RACH configuration that is used for determining RACH parameters for RACH transmission for obtaining the TA value for the target cell. The value may also be configured as part of a configuration associated with the target cell (e.g. LTM configuration). The timer value may also be provided in a configuration configuring the timer operation. As an example, one or more timer values may be indicated, and/or no timer may be started.

In some example embodiments, the timer values may be expressed in milliseconds, seconds, slots, frames, symbols and so on. In one example, one timer value may indicate an 'infinite' value i.e. that timer does not expire unless explicitly expired or based on a condition.

In some example embodiments, the timer may have a value (e.g. a fixed value such as X milliseconds or X seconds, etc.) defined in a specification. As an example, the terminal device 110 may be required to maintain downlink timing/synchronization for X milliseconds (or X seconds, etc.).

In any of the examples herein the starting time for the maintenance of the downlink timing may be the reception of downlink transmission configuring the UL transmission (for TA acquisition) or the UL transmission (for TA acquisition) or the reception of a response to the UL transmission (for TA acquisition). The response may be provided by the serving cell or the cell that was the target for the UL transmission.

In some example embodiments, the downlink timing of the reference cell (maintained using one or more downlink reference signals of the cell) is used as the reference (i.e. reference point) for the (UL) transmission timing of the terminal device 110.

In some example embodiments the downlink timing adjustment may refer to monitoring that the downlink timing used of uplink transmission timing for a cell does not exceed a specific error limit (e.g. X nanoseconds). In some examples, if the transmission timing exceeds the limit, the terminal device 110 may be required to adjust its timing.

In some example embodiments the downlink timing may be used to determine uplink transmission timing. If the uplink transmission timing error exceeds a specific value (e.g. X nanoseconds) then the terminal device 110 may be required to adjust its timing.

In some example embodiments, the timer may be cell specific or cell group specific. In other words, the value of the timer may be configured as cell specific or cell group specific.

As shown in FIG. 2, the terminal device 110 performs (215) TA acquisition on the at least one target cell for cell switching from the serving cell for the terminal device 110 to one of the at least one target cell. For example, the TA acquisition on the at least one target cell may be triggered by the serving cell. Then, the terminal device adjusts (220) downlink timing of the at least one target cell, when the timer is running at the terminal device 110.

The timer may be configured to be started in a variety of ways. In some example embodiments, the timer may start when the terminal device 110 is triggered to transmit or has transmitted one or more uplink transmissions for the TA acquisition on the at least one target cell. That is, the terminal device 110 may start the timer upon receiving a triggering message from the network device 120 or upon one or more transmissions of one or more uplink signals. The one or more uplink transmissions may comprise a random access channel (RACH) transmission. Alternatively or additionally, the one or more uplink transmissions may comprise an SRS transmission. For example, the terminal device 110 may receive a PDCCH order to a cell configured as a mobility target cell/a cell with different PCI than the serving cell, and as a response, it may transmit a RACH or SRS transmission to the network device 120, and then, on this basis, the terminal device 110 may start the timer.

In some other example embodiments, the timer may start when the terminal device 110 receives a response to one or more uplink transmissions for the TA acquisition. The one or more uplink transmissions may comprise a RACH transmission. Alternatively or additionally, the one or more uplink transmissions may comprise an SRS transmission. For example, the response may be received from the serving cell. As another example, the response may be received from the at least one target cell. For instance, the response may comprise a RAR.

In some example embodiments, the terminal device 110 may monitor the downlink timing of the at least one target cell, when the timer is running. In other words, when the timer is running, the terminal device may monitor the downlink timing for the one or more target cells associated with the timer.

In some example embodiments, the downlink timing of the at least one target cell may be adjusted for an uplink transmission. For example, the terminal device 110 may adjust the downlink timing for any uplink transmission.

In some example embodiments, one or more reference signals of the at least one target cell may be used as one or more references for adjusting downlink timing of the at least one target cell, when the timer is running. In this case, when the timer is running, the terminal device 110 may adjust the downlink timing of the target cell based on the reference timing of a downlink reference signal for which the uplink transmission for TA acquisition is triggered. As an example, one or more downlink reference signals used as one or more references to perform one or more uplink transmissions for the TA acquisition for the at least one target cell may be used as one or more references for adjusting downlink timing of the at last one target cell, when the timer is running.

In some example embodiments, the terminal device 110 may stop adjusting the downlink timing of the at least one target cell if the timer is expired. In this case, upon expiry of the timer, the terminal device may not be required to adjust its timing, for example, using a target cell associated with the timer as a reference cell.

In some example embodiments, the terminal device 110 may expire the timer if it determines that a condition is fulfilled. For example, the terminal device 110 may expire the timer, if it receives a cell switch command to one of the at least one target cell. As another example, the terminal device 110 may expire the timer, if a result of at least one reference signal received power (RSRP) measurement for the at least one target cell is below a threshold. That is, the terminal device 110 may expire the timer, if a target cell configured with layer 1 (L1)-RSRP measurements is not considered a valid cell, i.e the RSRP to be reported is below a threshold.

In some example embodiments, the terminal device 110 may monitor or adjust, when the timer is running, downlink timing of a plurality of cells (for example, a plurality of recent cells) for which an uplink transmission for TA acquisition has been performed. The plurality of cells may comprise one or more cells of the at least one target cell. For example, the terminal device 110 may be configured to monitor downlink timing or adjust downlink timing for the N most recent cells (for example, with N PCIs) for which the uplink transmission for TA acquisition has been performed. The N-most recent may comprise N-most recent cells with different PCIs than the serving cell or addition to the serving cell. As an example, the value N=2 may include the serving cell in which case the terminal device 110 may be required to adjust downlink timing for one cell in addition to the serving cell (or serving cells). In another example, N=2 may mean that the terminal device 110 is required to maintain downlink timing for two (N=2) cells (wherein the N cells are LTM candidates and/or are cells with different PCIs than serving cell(s)). That is, the N-most recent cells may comprise or may not comprise the serving cell. As an example, the N-most cells may comprise a target cell for which the timer is running.

In some example embodiments, the terminal device 110 may consider a target cell associated with the timer as a reference for additional downlink timing (for example, additional to the serving cell timing) as long as the timer is running.

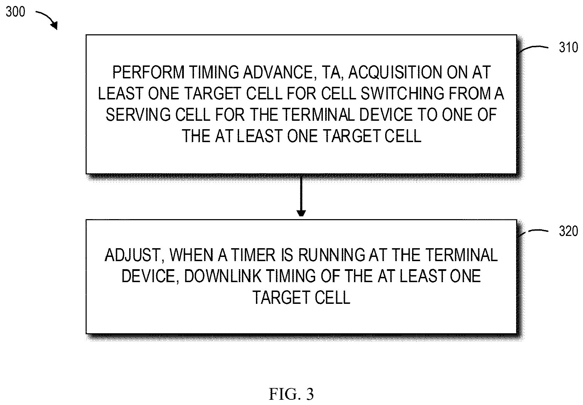

FIG. 3 illustrates a flowchart 300 of a method implemented at a terminal device according to some embodiments of the present disclosure. For the purpose of discussion, the method 300 will be described from the perspective of the terminal device 110 with reference to FIG. 1A.

At block 310, the terminal device 110 performs timing advance, TA, acquisition on at least one target cell for cell switching from a serving cell for the terminal device 110 to one of the at least one target cell. At block 320, the terminal device 110 adjusts, when a timer is running at the terminal device 110, downlink timing of the at least one target cell.

In some example embodiments, the timer may start when the terminal device 110 is triggered to transmit or has transmitted one or more uplink transmissions for the TA acquisition on the at least one target cell. In some example embodiments, the one or more uplink transmissions may comprise a random access channel, RACH, transmission, a sounding reference signal, SRS, transmission, or any combination of the above mentioned items.

In some example embodiments, the timer may start when the terminal device 110 receives a response to one or more uplink transmissions for the TA acquisition. In some example embodiments, the one or more uplink transmissions may comprise a RACH transmission, a SRS transmission, or any combination of the above mentioned items. In some example embodiments, the response may be received from the serving cell or the at least one target cell. In some example embodiments, the response may comprise a random access response, RAR.

In some example embodiments, the TA acquisition on the at least one target cell may be triggered by the serving cell.

In some example embodiments, the serving cell and the at least one target cell may have different physical cell identifiers, PCIs.

In some example embodiments, one or more reference signals of the at least one target cell may be used as one or more references for adjusting downlink timing of the at least one target cell, when the timer is running.

In some example embodiments, one or more downlink reference signals used as one or more references to perform one or more uplink transmissions for the TA acquisition for the at least one target cell may be used as one or more references for adjusting downlink timing of the at last one target cell, when the timer is running.

In some example embodiments, the terminal device 110 may further monitor, when the timer is running, the downlink timing of the at least one target cell.

In some example embodiments, the downlink timing of the at least one target cell may be adjusted for an uplink transmission.

In some example embodiments, the terminal device 110 may further, upon expiry of the timer, stop adjusting the downlink timing of the at least one target cell.

In some example embodiments, the timer may be cell specific or cell group specific.

In some example embodiments, the terminal device 110 may further receive, from a network device 120, configuration information for the timer. In some example embodiments, the configuration information may be comprised in downlink control information, DCI, a RACH configuration for a RACH transmission, or any combination of the above-listed items. The DCI may trigger a physical downlink control channel, PDCCH, order for a RACH transmission for the TA acquisition, an SRS transmission for the TA acquisition, or any combination of the above-listed items. In some example embodiments, the DCI may indicate whether the terminal device 110 starts the timer for adjusting the downlink timing. In some example embodiments, the DCI may indicate, to the terminal device 110, a value of the timer for adjusting the downlink timing.

In some example embodiments, the terminal device 110 may further determine that a condition is fulfilled. In some example embodiments, the condition may comprise reception of a cell switch command to one of the at least one target cell, a result of at least one reference signal received power, RSRP, measurement for the at least one target cell is below a threshold, or any combination of the above-listed items. In some example embodiments, the terminal device 110 may further expire the timer, based on the determining that the condition is fulfilled.

In some example embodiments, the downlink timing of the at least one target cell may be adjusted based on a reference timing of a downlink reference signal for which an uplink transmission for the TA acquisition is triggered.

In some example embodiments, the terminal device 110 may further monitor or adjust, when the timer is running, downlink timing of a plurality of cells for which an uplink transmission for TA acquisition has been performed, the plurality of cells comprising one or more cells of the at least one target cell.

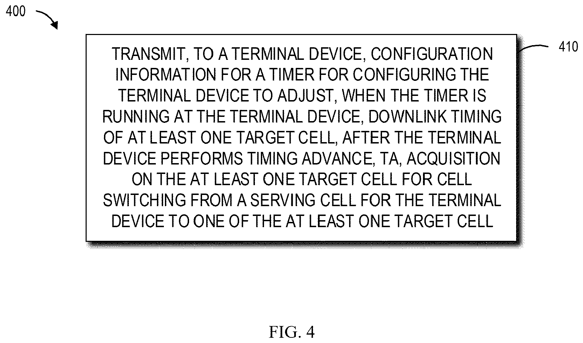

FIG. 4 illustrates a flowchart 400 of a method implemented at a network device according to some embodiments of the present disclosure. For the purpose of discussion, the method 400 will be described from the perspective of the network device 120 with reference to FIG. 1A.

At block 410, the network device 120 transmits, to a terminal device 110, configuration information for a timer for configuring the terminal device 110 to adjust, when the timer is running at the terminal device 110, downlink timing of at least one target cell, after the terminal device 110 performs timing advance, TA, acquisition on the at least one target cell for cell switching from a serving cell for the terminal device 110 to one of the at least one target cell.

In some example embodiments, the timer may be configured to be started when the terminal device 110 is triggered to transmit or has transmitted one or more uplink transmissions for the TA acquisition on the at least one target cell. In some example embodiments, the one or more uplink transmissions may comprise a random access channel, RACH, transmission, a sounding reference signal, SRS, transmission, or any combination of the above-listed items.

In some example embodiments, the timer may be configured to be started when the terminal device 110 is transmitted or provided with a response, to one or more uplink transmissions for the TA acquisition. In some example embodiments, the one or more uplink transmissions may comprise a RACH transmission, an SRS transmission, or any combination of the above-listed items. In some example embodiments, the response may be provided or transmitted from the serving cell or the at least one target cell. In some example embodiments, the response may comprise a random access response, RAR.

In some example embodiments, the TA acquisition on the at least one target cell may be triggered by the serving cell.

In some example embodiments, the serving cell and the at least one target cell may have different physical cell identifiers, PCIs.

In some example embodiments, one or more reference signals of the at least one target cell may be used as one or more references for adjusting downlink timing of the at least one target cell at the terminal device 110, when the timer is running.

In some example embodiments, one or more downlink reference signals used as one or more references to perform one or more uplink transmissions for the TA acquisition for the at least one target cell may be used as one or more references for adjusting downlink timing of the at last one target cell at the terminal device 110, when the timer is running.

In some example embodiments, the timer may be cell specific or cell group specific.

In some example embodiments, the configuration information may be comprised in downlink control information, DCI, a RACH configuration for a RACH transmission, or any combination of the above-listed items. The DCI may trigger a physical downlink control channel, PDCCH, order for a RACH transmission for the TA acquisition, an SRS transmission for the TA acquisition, or any combination of the above-listed items. In some example embodiments, the DCI may indicate whether the terminal device 110 is indicated/configured to start the timer for adjusting the downlink timing. In some example embodiments, the DCI may indicate, to the terminal device 110, a value of the timer for adjusting the downlink timing.

In some example embodiments, the timer may be configured to be expired based on determining that a condition fulfilled. In some example embodiments, the condition may comprise provision of a cell switch command to one of the at least one target cell, or a reported result of at least one reference signal received power, RSRP, measurement by the terminal device 110 for the at least one target cell is below a threshold, or any combination of the above-listed items.

In some example embodiments, an apparatus capable of performing the method 300 (for example, the terminal device 110) may comprise means for performing the respective steps of the method 300. The means may be implemented in any suitable form. For example, the means may be implemented in a circuitry or software module.

In some example embodiments, the apparatus comprises means for performing timing advance, TA, acquisition on at least one target cell for cell switching from a serving cell for the apparatus to one of the at least one target cell; and means for adjusting, when a timer is running at the apparatus, downlink timing of the at least one target cell.

In some example embodiments, the timer starts when the apparatus is triggered to transmit or has transmitted one or more uplink transmissions for the TA acquisition on the at least one target cell. In some example embodiments, the one or more uplink transmissions comprise at least one of the following: a random access channel, RACH, transmission; or a sounding reference signal, SRS, transmission.

In some example embodiments, the timer starts when the apparatus receives a response to one or more uplink transmissions for the TA acquisition. In some example embodiments, the one or more uplink transmissions comprise at least one of the following: a RACH transmission; or an SRS transmission. In some example embodiments, the response is received from the serving cell or the at least one target cell. In some example embodiments, the response comprises a random access response, RAR.

In some example embodiments, the TA acquisition on the at least one target cell is triggered by the serving cell.

In some example embodiments, the serving cell and the at least one target cell have different physical cell identifiers, PCIs.

In some example embodiments, one or more reference signals of the at least one target cell are used as one or more references for adjusting the downlink timing of the at least one target cell, when the timer is running.

In some example embodiments, one or more downlink reference signals used as one or more references to perform one or more uplink transmissions for the TA acquisition for the at least one target cell are used as one or more references for adjusting the downlink timing of the at last one target cell, when the timer is running.

In some example embodiments, the apparatus further comprises: means for monitoring, when the timer is running, the downlink timing of the at least one target cell.

In some example embodiments, the downlink timing of the at least one target cell is adjusted for an uplink transmission.

In some example embodiments, the apparatus further comprises: means for, upon expiry of the timer, stopping adjusting the downlink timing of the at least one target cell.

In some example embodiments, the timer is cell specific or cell group specific.

In some example embodiments, the apparatus further comprises: means for receiving, from a network device, configuration information for the timer. In some example embodiments, the configuration information is comprised in at least one of the following: downlink control information, DCI, triggering one of the following: a physical downlink control channel, PDCCH, order for a RACH transmission for the TA acquisition, or an SRS transmission for the TA acquisition; or a RACH configuration for a RACH transmission. In some example embodiments, the DCI indicates whether the apparatus starts the timer for adjusting the downlink timing. In some example embodiments, the DCI indicates, to the apparatus, a value of the timer for adjusting the downlink timing.

In some example embodiments, the apparatus may further comprises: means for determining that a condition is fulfilled. In some example embodiments, the condition comprises at least one of the following: reception of a cell switch command to one of the at least one target cell; or a result of at least one reference signal received power, RSRP, measurement for the at least one target cell is below a threshold. In some example embodiments, the apparatus may further comprises: means for, based on the determining that the condition is fulfilled, expiring the timer.

In some example embodiments, the downlink timing of the at least one target cell is adjusted based on a reference timing of a downlink reference signal for which an uplink transmission for the TA acquisition is triggered.

In some example embodiments, the apparatus further comprises: means for monitoring or adjust, when the timer is running, downlink timing of a plurality of cells for which an uplink transmission for TA acquisition has been performed, the plurality of cells comprising one or more cells of the at least one target cell.

In some example embodiments, the apparatus further comprises means for performing other steps in some embodiments of the method 300. In some embodiments, the means comprises at least one processor and at least one memory including computer program code. The at least one memory and computer program code are configured to, with the at least one processor, cause the performance of the apparatus.

In some example embodiments, an apparatus capable of performing the method 400 (for example, the network device 120) may comprise means for performing the respective steps of the method 400. The means may be implemented in any suitable form. For example, the means may be implemented in a circuitry or software module.

In some example embodiments, the apparatus comprises means for transmitting, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In some example embodiments, the timer is configured to be started when the terminal device is triggered to transmit or has transmitted one or more uplink transmissions for the TA acquisition on the at least one target cell. In some example embodiments, the one or more uplink transmissions comprise at least one of the following: a random access channel, RACH, transmission; or a sounding reference signal, SRS, transmission.

In some example embodiments, the timer is configured to be started when the terminal device is transmitted or provided with a response, to one or more uplink transmissions for the TA acquisition. In some example embodiments, the one or more uplink transmissions comprise at least one of the following: a RACH transmission; or an SRS transmission. In some example embodiments, the response is provided or transmitted from the serving cell or the at least one target cell. In some example embodiments, the response comprises a random access response, RAR.

In some example embodiments, the TA acquisition on the at least one target cell is triggered by the serving cell.

In some example embodiments, the serving cell and the at least one target cell have different physical cell identifiers, PCIs.

In some example embodiments, one or more reference signals of the at least one target cell are used as one or more references for adjusting the downlink timing of the at least one target cell at the terminal device, when the timer is running.

In some example embodiments, one or more downlink reference signals used as one or more references to perform one or more uplink transmissions for the TA acquisition for the at least one target cell are used as one or more references for adjusting the downlink timing of the at last one target cell at the terminal device, when the timer is running.

In some example embodiments, the timer is cell specific or cell group specific.

In some example embodiments, the configuration information is comprised in at least one of the following: downlink control information, DCI, triggering one of the following: a physical downlink control channel, PDCCH, order for a RACH transmission for the TA acquisition, or an SRS transmission for the TA acquisition; or a RACH configuration for a RACH transmission. In some example embodiments, the DCI indicates whether the terminal device is indicated/configured to start the timer for adjusting the downlink timing. In some example embodiments, the DCI indicates, to the terminal device, a value of the timer for adjusting the downlink timing.

In some example embodiments, the timer is configured to be expired based on determining that a condition fulfilled. In some example embodiments, the condition comprises at least one of the following: provision of a cell switch command to one of the at least one target cell; or a reported result of at least one reference signal received power, RSRP, measurement by the terminal device for the at least one target cell is below a threshold.

In some example embodiments, the apparatus further comprises means for performing other steps in some embodiments of the method 400. In some embodiments, the means comprises at least one processor and at least one memory including computer program code. The at least one memory and computer program code are configured to, with the at least one processor, cause the performance of the apparatus.

In some example embodiments, an apparatus capable of performing the method 300 (for example, the terminal device 110) may comprise at least one processor; and at least one memory storing instructions that, when executed by the at least one processor, cause the apparatus at least to: perform timing advance, TA, acquisition on at least one target cell for cell switching from a serving cell for the apparatus to one of the at least one target cell; and adjust, when a timer is running at the apparatus, downlink timing of the at least one target cell.

In some example embodiments, the timer starts when the apparatus is triggered to transmit or has transmitted one or more uplink transmissions for the TA acquisition on the at least one target cell. In some example embodiments, the one or more uplink transmissions comprise at least one of the following: a random access channel, RACH, transmission; or a sounding reference signal, SRS, transmission.

In some example embodiments, the timer starts when the apparatus receives a response to one or more uplink transmissions for the TA acquisition. In some example embodiments, the one or more uplink transmissions comprise at least one of the following: a random access channel, RACH, transmission; or a sounding reference signal, SRS, transmission. In some example embodiments, the response is received from the serving cell or the at least one target cell. In some example embodiments, the response comprises a random access response, RAR.

In some example embodiments, the TA acquisition on the at least one target cell is triggered by the serving cell.

In some example embodiments, the serving cell and the at least one target cell have different physical cell identifiers, PCIs.

In some example embodiments, one or more reference signals of the at least one target cell are used as one or more references for adjusting downlink timing of the at least one target cell, when the timer is running.

In some example embodiments, one or more downlink reference signals used as one or more references to perform one or more uplink transmissions for the TA acquisition for the at least one target cell are used as one or more references for adjusting downlink timing of the at last one target cell, when the timer is running.

In some example embodiments, the apparatus is further caused to: monitor, when the timer is running, the downlink timing of the at least one target cell.

In some example embodiments, the downlink timing of the at least one target cell is adjusted for an uplink transmission.

In some example embodiments, the apparatus is further caused to: upon expiry of the timer, stop adjusting the downlink timing of the at least one target cell.

In some example embodiments, the timer is cell specific or cell group specific.

In some example embodiments, the apparatus is further caused to: receive, from a network device, configuration information for the timer. In some example embodiments, the configuration information is comprised in at least one of the following: downlink control information, DCI, triggering one of the following: a physical downlink control channel, PDCCH, order for a RACH transmission for the TA acquisition, or an SRS transmission for the TA acquisition; or a RACH configuration for a RACH transmission. In some example embodiments, the DCI indicates whether the apparatus starts the timer for adjusting the downlink timing. In some example embodiments, the DCI indicates, to the apparatus, a value of the timer for adjusting the downlink timing.

In some example embodiments, the apparatus is further caused to: determine that a condition is fulfilled. In some example embodiments, the condition comprises at least one of the following: reception of a cell switch command to one of the at least one target cell; or a result of at least one reference signal received power, RSRP, measurement for the at least one target cell is below a threshold. In some example embodiments, the apparatus is further caused to: based on the determining that the condition is fulfilled, expire the timer.

In some example embodiments, the downlink timing of the at least one target cell is adjusted based on a reference timing of a downlink reference signal for which an uplink transmission for the TA acquisition is triggered.

In some example embodiments, the apparatus is further caused to: monitor or adjust, when the timer is running, downlink timing of a plurality of cells for which an uplink transmission for TA acquisition has been performed, the plurality of cells comprising one or more of the at least one target cell.

In some example embodiments, an apparatus capable of performing the method 400 (for example, the network device 120) may comprise at least one processor; and at least one memory storing instructions that, when executed by the at least one processor, cause the apparatus at least to: transmit, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

In some example embodiments, the timer is configured to be started when the terminal device is triggered to transmit or has transmitted one or more uplink transmissions for the TA acquisition on the at least one target cell. In some example embodiments, the one or more uplink transmissions comprise at least one of the following: a random access channel, RACH, transmission; or a sounding reference signal, SRS, transmission.

In some example embodiments, the timer is configured to be started when the terminal device is transmitted or provided with a response to one or more uplink transmissions for the TA acquisition. In some example embodiments, the one or more uplink transmissions comprise at least one of the following: a RACH transmission; or an SRS transmission. In some example embodiments, the response is provided or transmitted from the serving cell or the at least one target cell. In some example embodiments, the response comprises a random access response, RAR.

In some example embodiments, the serving cell and the at least one target cell have different physical cell identifiers, PCIs.

In some example embodiments, one or more reference signals of the at least one target cell are used as one or more references for adjusting downlink timing of the at least one target cell at the terminal device, when the timer is running.

In some example embodiments, one or more downlink reference signals used as one or more references to perform one or more uplink transmissions for the TA acquisition for the at least one target cell are used as one or more references for adjusting downlink timing of the at last one target cell at the terminal device, when the timer is running.

In some example embodiments, the timer is cell specific or cell group specific.

In some example embodiments, the configuration information is comprised in at least one of the following: downlink control information, DCI, triggering one of the following: a physical downlink control channel, PDCCH, order for a RACH transmission for the TA acquisition, or an SRS transmission for the TA acquisition; or a RACH configuration for a RACH transmission. In some example embodiments, the DCI indicates whether the terminal device is indicated/configured to start the timer for adjusting the downlink timing. In some example embodiments, the DCI indicates, to the terminal device, a value of the timer for adjusting the downlink timing.

In some example embodiments, the timer is configured to be expired based on determining that a condition fulfilled. In some example embodiments, the condition comprises at least one of the following: provision of a cell switch command to one of the at least one target cell; or a reported result of at least one reference signal received power, RSRP, measurement by the terminal device for the at least one target cell is below a threshold.

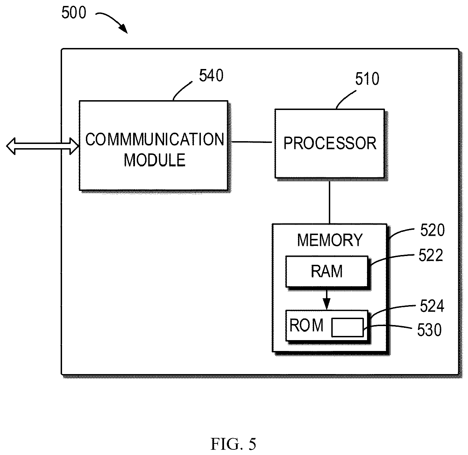

FIG. 5 illustrates a simplified block diagram of a device 500 that is suitable for implementing some example embodiments of the present disclosure. The device 500 may be provided to implement the communication device, for example, the terminal device 110, or the network device 120 as shown in FIG. 1A. As shown, the device 500 includes one or more processors 510, one or more memories 520 coupled to the processor 510, and one or more communication modules 540 coupled to the processor 510.

The communication module 540 is for bidirectional communications. The communication module 540 has at least one antenna to facilitate communication. The communication interface may represent any interface that is necessary for communication with other network elements.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the ROM 524. The processor 510 may perform any suitable actions and processing by loading the program 530 into the RAM 522.

The embodiments of the present disclosure may be implemented by means of the program 530 so that the device 500 may perform any process of the disclosure as discussed with reference to FIG. 2. The embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like.

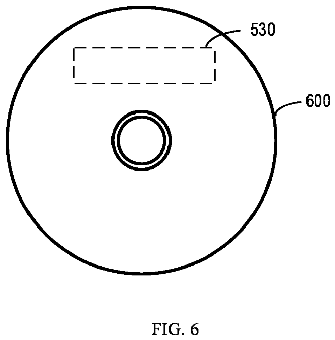

FIG. 6 illustrates a block diagram of an example of a computer readable medium 600 in accordance with some example embodiments of the present disclosure. The computer readable medium 600 has the program 530 stored thereon. It is noted that although the computer readable medium 600 is depicted in form of CD or DVD in FIG. 6, the computer readable medium 600 may be in any other form suitable for carry or hold the program 530.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method as described above with reference to any of FIGS. 3 to 4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus, comprising:
means for, at a terminal device, performing timing advance, TA, acquisition on at least one target cell for cell switching from a serving cell for the terminal device to one of the at least one target cell; and
means for, at the terminal device, adjusting, when a timer is running at the terminal device, downlink timing of the at least one target cell.

2. The apparatus of claim 1, wherein the timer starts when the terminal device is triggered to transmit or has transmitted one or more uplink transmissions for the TA acquisition on the at least one target cell; or when the terminal device receives a response to one or more uplink transmissions for the TA acquisition.

3. The apparatus of claim 2, wherein the response is received from the serving cell or the at least one target cell.

4. The apparatus of any of claims 1-3, wherein one or more reference signals of the at least one target cell are used as one or more references for adjusting the downlink timing of the at least one target cell, when the timer is running.

5. The apparatus of any of claims 1-4, wherein one or more downlink reference signals used as one or more references to perform one or more uplink transmissions for the TA acquisition for the at least one target cell are used as one or more references for adjusting the downlink timing of the at last one target cell, when the timer is running.

6. The apparatus of any of claims 1-5, further comprising:
means for, at the terminal device, upon expiry of the timer, stopping adjusting the downlink timing of the at least one target cell.

7. The apparatus of any of claims 1-6, further comprising:
means for, at the terminal device, determining that a condition is fulfilled, wherein the condition comprises at least one of the following:
reception of a cell switch command to one of the at least one target cell; or
a result of at least one reference signal received power, RSRP, measurement for the at least one target cell is below a threshold; and
means for, based on the determining that the condition is fulfilled, expiring the timer.

8. The apparatus of any of claims 1-7, further comprising:
means for, at the terminal device, monitoring or adjusting, when the timer is running, downlink timing of a plurality of cells for which an uplink transmission for TA acquisition has been performed, the plurality of cells comprising one or more cells of the at least one target cell.

9. The apparatus of any of claims 1-8, further comprising:
means for receiving at the terminal device, from a network device, configuration information for the timer.

10. An apparatus, comprising:
means for, at a network device, transmitting, to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

11. The apparatus of claim 9 or 10, wherein the configuration information is comprised in at least one of the following:
downlink control information, DCI, triggering one of the following: a physical downlink control channel, PDCCH, order for a random access channel, RACH, transmission for the TA acquisition, or a sounding reference signal, SRS, transmission for the TA acquisition; or
a RACH configuration for a RACH transmission.

12. The apparatus of claim 11, wherein the DCI indicates whether the terminal device starts the timer for adjusting the downlink timing.

13. A method comprising:
performing, by a terminal device, timing advance, TA, acquisition on at least one target cell for cell switching from a serving cell for the terminal device to one of the at least one target cell; and
adjusting, by the terminal device, when a timer is running at the terminal device, downlink timing of the at least one target cell.

14. A method comprising:
transmitting, by a network device and to a terminal device, configuration information for a timer for configuring the terminal device to adjust, when the timer is running at the terminal device, downlink timing of at least one target cell, after the terminal device performs timing advance, TA, acquisition on the at least one target cell for cell switching from a serving cell for the terminal device to one of the at least one target cell.

15. A computer readable medium comprising program instructions that, when executed by an apparatus, cause the apparatus to perform at least the method of claim 13 or 14.
